# EUROPEAN PATENT APPLICATION

(11) **EP 4 316 239 A1**
(43) Date of publication of application: **07.02.2024**
(21) Application number: 22188466.1
(22) Date of filing: 03.08.2022
(51) Int. Cl.: A01M 7/00

(54) **AGRICULTURAL MACHINE AND METHOD OF IDENTIFYING A NOZZLE IN AN ACTIVE POSITION AND ITS CHARACTERISTICS ON THE AGRICULTURAL MACHINE**

(71) Applicant: Deere & Company, Moline, IL 61265 (US)
(72) Inventor: HLOBEN, PETER, 68163 Mannheim (DE)
(74) Representative: Reichert, Christian

(57) **Abstract**

An agricultural machine (10) comprises a chassis (12), a liquid tank (14), a spray boom assembly (16) and a conduit (24). The spray boom assembly (16) includes a center frame (18) and laterally extendable right and left booms (20, 22). The conduit (24) defines a liquid flow path and is associated with the spray boom assembly (16). Further, at least one nozzle body (26) is placed at a bottom side of the boom (20, 22), wherein, the nozzle body (26) comprising plurality of nozzles (28). A transponder tag (30) is placed on each nozzle (28) of said nozzle body (26), wherein, the tag (30) comprises specific information including characteristics of the respective each nozzle (28). Furthermore, a reader assembly (32) comprises an antenna (34) and a controller (36), wherein, the reader assembly (32) is configured to emit electromagnetic waves (38) through the antenna (34) to receive information from the particular transponder tag (30) of the respective each nozzle (28). The transponder tag (30) is configured to receive the electromagnetic waves (38) and generates signal (40) back to the reader assembly (32) with the specific information for the respective nozzle (28). Further The nozzle body (26) comprises a stationary portion and a rotatable nozzle turret (42) wherein the plurality of nozzles (28) are mounted to the nozzle turret (42). Each nozzle (28) is configured to be placeable into an active position (44) by rotation of the nozzle turret (42). Furthermore, the reader assembly (32) is placed on a location of the spray boom assembly (16) in order to enter a range of communication with the respective transponder tag (30) of the respective nozzle (28) when the nozzle (28) being placed into the active position (44) by rotation. Moreover, the controller (36) is configured to receive the specific information from the respective transponder tag (30) to identify characteristics of the respective nozzle (28) being placed by rotation into the active position (44). Further, a method of identifying a nozzle (28) in an active position (44) and its characteristics on the agricultural machine is disclosed.

## Description

### Field of the Disclosure

The invention relates to agricultural machines, particularly to agricultural sprayers and more particularly to a system and a method of identifying the nozzle, mounted on a spray boom assembly of the agricultural sprayer, in active position and its characteristics.

### Background of the Disclosure

For increasing agricultural yield, chemical substances such as fertilizers, pesticides, insecticides, herbicides, fungicides etc. are sprayed periodically on selected targets in the field. Although, use of the chemical substances is viewed as beneficial, it is also responsible for many undesirable effects, including crop damage due to toxins, environmental pollution and human illnesses. Environmental pollution includes contamination of soil, water and air.

The chemical substances sprayed over a field can stay in the soil for years or decades and continue to harm soil health due to its overuse. Also, these chemical substances used for treating plants and soil can reach surface water or nearby waterbodies through runoff. Contamination of water by pesticides is widespread. Air pollution comes mainly in the form of ammonia (NH3), which enters the air as a gas from heavily fertilized fields and livestock waste. In general, during spraying operation in the field, the presence of wind causes uncontrolled drifting of the chemical substances over the entire field which causes pollution. Even an approved amount of chemical substances have a number of certain side effects.

Hence, in order to minimize the pollution, government has set up regulations for use of spraying material and respective documentation of the same with respect to type and/or quantity of the chemicals and the type of nozzle, pattern. Thus, it is important to calculate the amount of spraying material spread over the field during spraying operation and the correct nozzle in active position. Therefore, one object of the invention is to facilitate spraying operation in compliance with said government regulations.

### Summary of the Disclosure

It is therefore an object of the present invention to provide a system and a method of identifying a nozzle, mounted on a spray boom assembly of the agricultural sprayer, in active position and its characteristics which overcomes most or all of the aforementioned problems.

The object will be achieved by the teaching of the claims 1 and 9, wherein further advantageous solutions are defined by the meaning of the respective sub claims.

Accordingly, an agricultural machine with a system and a method of identifying the nozzle, mounted on a spray boom assembly of the agricultural machine, in active position and its characteristics is provided. The mentioned agricultural machine may be a self-propelled, trailed or mounted agricultural sprayer.

Further, the agricultural machine comprises a chassis, a liquid tank, a spray boom assembly with center frame, laterally extendable right and left booms and a conduit defining a liquid flow path associated with the spray boom assembly.

Furthermore, at least one nozzle body is placed at a bottom side of the boom. The nozzle body may be comprising of stationary and/or respectively non-rotating portions and a rotatable nozzle turret on which a plurality of nozzles are mounted. The plurality of nozzles mounted to nozzle turret may be of two or more in numbers. Further, the plurality nozzles may include flat tapered fan, flat even fan, deflect, anvil/flood, full cone or hollow cone, twin spray, single or multiple streams, air- induced spray patterns and combination thereof. These nozzles may be used to discharge chemicals like liquid/granular fertilizers, pesticides, insecticides, herbicides, fungicides, desiccants and any such chemicals thereof. Also, these nozzles may be capable of discharging from extremely fine to extremely coarse chemicals. The nozzles may be made up of the material including engineered plastic (e.g., polyacetal), polypropylene, ceramic, stainless steel, soft metal like aluminum or brass, or of know type or any such material with combinations thereof. Moreover, each nozzle is configured to be placeable into an active position by rotation of the nozzle turret. There may be one or more than one nozzle is configured to be placeable into the active position. The nozzles in the active position may be in consecutive, alternate, adverse and/or in diagonal manner. The rotation of the nozzle turret, to place the nozzles into active position, may be achieved automatically with the help of a motor operable from operator station or remotely and/or manually operable by an operator.

Further, a transponder tag is placed on each nozzle of the nozzle body. Preferably, the transponder tag is a passive radio frequency identification tag. Alternatively, the transponder tag may include semi-passive RFID, active RFID, low frequency, high frequency, or ultra-high frequency tags. Moreover, the tag comprises specific information including characteristics of the respective each nozzle, wherein, the specific information of the nozzle includes type of the nozzle, size of the nozzle and spray angle.

Further, a reader assembly comprises an antenna and a controller. The reader assembly is configured to emit electromagnetic waves through the antenna to receive information from the particular transponder tag of the respective each nozzle. Furthermore, the transponder tag is configured to receive the electromagnetic waves and generates signal back to the reader assembly with the specific information for the respective nozzle. The reader assembly is placed on a location of the spray boom assembly in order to enter a range of communication with the respective transponder tag of the respective nozzle when the nozzle being placed into the active position by rotation. Preferably, the reader assembly is placed on the stationary portion of the nozzle body in such way that it enters a range of communication with the respective transponder tag of the respective nozzle when the respective nozzle is placed in the active position by rotation. Alternatively, the reader assembly may be placed on the boom or on components attached to the boom, which may be a predetermined distance from the tag.

Further, the controller is configured to receive the specific information from the respective transponder tag to identify characteristics of the respective nozzle being placed by rotation into the active position. The controller may configure to vary sprayer settings based on the identified nozzle in the active position and its characteristics and the specific spraying requirements. The sprayer settings may include one or more of boom height, spray pressure, sprayer speed, spray drift and combination thereof.

Moreover, the controller may store and retrieve data related to specific spraying requirements. The agricultural machine may comprise a global positioning system (GPS) which may store positioning data of the agricultural machine at a field location. The controller may store and retrieve the positioning data and utilization of the appropriate nozzle as per crop requirement at particular position. This data may be used as historic data in future operations of agricultural machines.

Further, a method of identifying a nozzle in an active position and the nozzle characteristics on an agricultural machine of the above might be applied. The nozzle is mounted on a spray boom assembly of said agricultural machine, and the method may comprise placing a nozzle into an active position by rotation; thereby entering a range of communication between the reader assembly and the respective transponder tag of the nozzle in the active position; emitting primary electromagnetic waves through an antenna of the reader assembly; and receiving the primary electromagnetic waves by the respective transponder tag. The transponder tag is energized upon receiving the primary electromagnetic waves in order to generate secondary electromagnetic waves by the respective transponder tag based on specific information for the respective nozzle. Then secondary electromagnetic waves are emitted by the respective transponder tag and secondary electromagnetic waves are received by the reader assembly, identifying the nozzle in the active position and its characteristics by the controller based on the secondary electromagnetic waves. The method may further comprise a step of storing and retrieving data related to specific spraying requirements by the controller. Further, the method may also comprise a step of varying sprayer settings by the controller based on the identified nozzle in the active position and its characteristics and the specific spraying requirements.

### Brief Description of the Drawings

Fig. 1 shows a schematic rear side perspective view of an agricultural sprayer with laterally extended spray booms.
Fig. 2 shows a schematic view of nozzle body with plurality of nozzles mounted on it.
Fig. 3 shows a detailed view of the nozzle in an active position, a reader assembly, and a transponder tag.

### Detailed Description

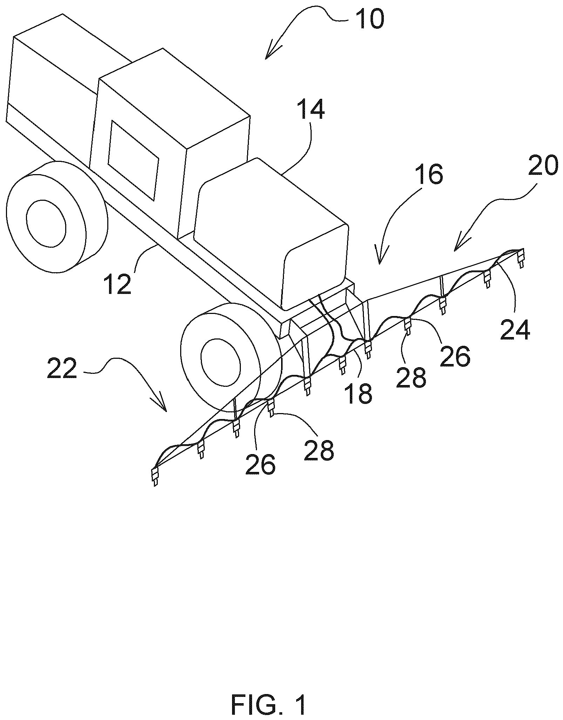

Referring now to Fig. 1, there is shown an agricultural machine such as a self-propelled agricultural sprayer 10. In an alternate embodiment, the agricultural machine may be a trailed or a mounted sprayer.

The agricultural sprayer 10 includes a chassis 12 that provides a structure for mounting numerous components associated with the agricultural sprayer 10 thereon. For example, the agricultural sprayer 10 includes a liquid tank 14 which stores a spray liquid comprising chemicals such as liquid/granular fertilizers, pesticides, insecticides, herbicides, fungicides, desiccants and any such chemicals thereof to be sprayed on a field. The liquid tank 14 is mounted on the chassis 12. The agricultural sprayer 10 also includes a spray boom assembly 16 located at a rear position of the agricultural sprayer 10. In alternative embodiments, the spray boom assembly 16 may be located at different locations on the agricultural sprayer 10 such as at a front end or in a mid-portion of the agricultural sprayer 10.The spray boom assembly 16 comprises a center frame 18 and laterally extendable right and left booms 20, 22. Further, the spray boom assembly 16 is operable to distribute the chemicals in the liquid tank 14 over a wide area in the field through a conduit 24, associated with the spray boom assembly 16. The spray boom assembly 14 comprises at least one nozzle body 26, which is placed at a bottom side of the spray boom assembly 16. The nozzle body 26 comprises of stationary and/or respectively non-rotating portions and a rotatable nozzle turret 42 on which a plurality of nozzles 28 are mounted. The plurality of nozzles 28 mounted to nozzle turret 42 may be of two or more in numbers. For example, six numbers of nozzles 28 may be mounted in circular fashion on the nozzle turret 42. Each nozzle 28 is configured to be placeable into an active position 44 by rotation of the nozzle turret 42 to discharge liquid chemicals as the agricultural sprayer 10 is propelled along the field of crop or plants.

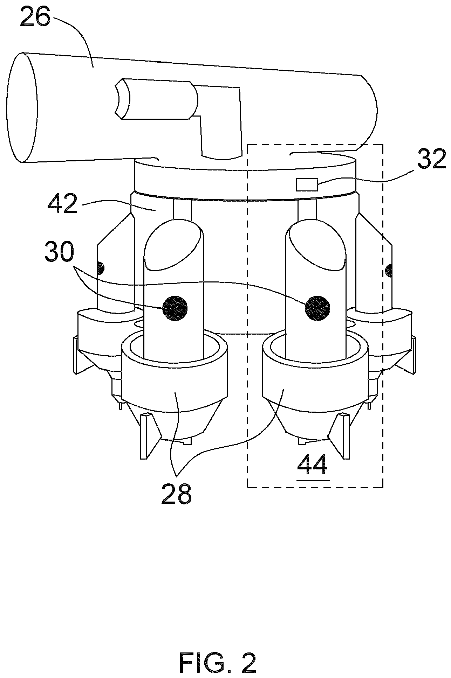

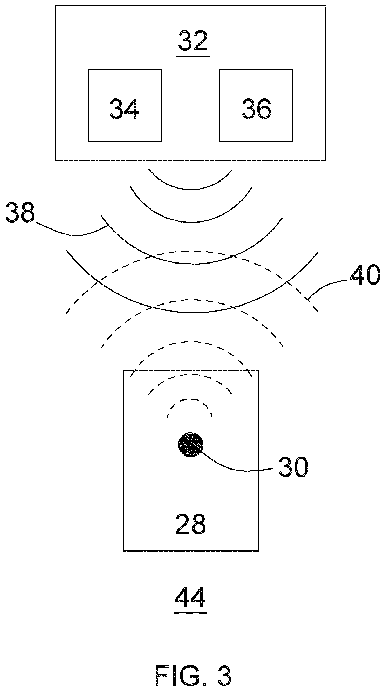

As shown in Fig. 2 and 3, a transponder tag 30 is placed on each nozzle 28 of the nozzle body 26. Preferably, the transponder tag 30 is a passive radio frequency identification tag. Further, the tag 30 comprises specific information including characteristics of the respective each nozzle 28, wherein, the specific information of the nozzle 28 includes type of the nozzle, size of the nozzle and spray angle. Further, a reader assembly 32 is placed on a location of the spray boom assembly 16 in order to enter a range of communication with the respective transponder tag 30 of the respective nozzle 28 when the nozzle 28 being placed into the active position 44 by rotation. Preferably, the reader assembly 32, in particular the antenna 34, is placed on the stationary portion of the nozzle body 26 in such way that it enters a range of communication with the respective transponder tag 30 of the respective nozzle 28 when the respective nozzle 28 is placed in the active position 44 by rotation. The reader assembly 32 comprises an antenna 34 and a controller 36. The reader assembly 32 is configured to emit electromagnetic waves 38 through the antenna 34 to receive information from the particular transponder tag 30 of the respective each nozzle 28. Furthermore, the transponder tag 30 is configured to receive the electromagnetic waves 38 and generates signal 40 back to the reader assembly 32 with the specific information for the respective nozzle 28. The controller 36 is configured to receive the specific information from the respective transponder tag 30 to identify characteristics of the respective nozzle 28 being placed by rotation into the active position 44.

In an operation, a method is applied which considers placing a nozzle 28 into an active position 44 by the rotation of the nozzle turret 42. Preferably, the rotation of the nozzle turret 42 may be achieved automatically with the help of a motor operable from an operator station or remotely. For example, six numbers of nozzles 28 may be mounted in circular fashion on the nozzle turret 42, out of which two adverse or consecutive or alternate nozzles 28 may be placed in the active position 44 by the rotation of the nozzle turret 42. The placement of the nozzle 28 in the active position 44 brings the transponder tag 30 of the nozzles 28 in the active position 44 and the reader assembly 34 into the range of communication. The reader assembly 32 emits primary electromagnetic waves 38 through the antenna 34. These primary electromagnetic waves 38 are received by the respective transponder tag 30 of the nozzle 28 in the active position 44. Upon receiving the primary electromagnetic waves 38, the respective transponder tag 30 gets energized in order to generate secondary electromagnetic waves 40 based on specific information for the respective nozzle 28. Further, the respective transponder tag 30 emits the secondary electromagnetic waves 40 which contains specific information for the respective nozzle 28. Then, the reader assembly 32 receives the secondary electromagnetic waves 40 based on specific information for the respective nozzle 28. Based on the secondary electromagnetic waves 40 along with the specific information for the respective nozzle 28, the controller 36 identifies the nozzle 28 in the active position 44 and its characteristics. Preferably, the controller 36 and the antenna 34 together may form the reader assembly 32 as a single or integral device. Alternatively, a separate controller 36 and a separate antenna 34 may form the reader assembly 32. Further, the controller 36 may vary sprayer settings based on the identified nozzle 28 in the active position 44 and its characteristics and the specific spraying requirements. The sprayer settings may include one or more of boom height, spray pressure, sprayer speed, spray drift and combination thereof.

The controller 36 may store and retrieve data related to specific spraying requirements. The agricultural machine 10 may comprise a global positioning system (GPS) which may store positioning data of the agricultural machine at a field location. The controller 36 may store and retrieve the positioning data and utilization of the appropriate nozzle 28 as per crop requirement at particular position. This data may be used as historic data in future operations of agricultural machines.

## Claims

1. An agricultural machine (10) comprising:
a chassis (12);
a liquid tank (14);
a spray boom assembly (16) with a center frame (18) and laterally extendable right and left booms (20, 22);
a conduit (24) defining a liquid flow path and associated with the spray boom assembly (16);
at least one nozzle body (26) placed at a bottom side of the boom (20, 22), wherein, the nozzle body (26) comprises plurality of nozzles (28);
a transponder tag (30) placed on each nozzle (28) of said nozzle body (26), wherein, the tag (30) comprises specific information including characteristics of the respective each nozzle (28);
a reader assembly (32) comprising an antenna (34) and a controller (36), wherein, the reader assembly (32) is configured to emit electromagnetic waves (38) through the antenna (34) to receive information from the particular transponder tag (30) of the respective each nozzle (28);
wherein, the transponder tag (30) is configured to receive the electromagnetic waves (38) and generates signal (40) back to the reader assembly (32) with the specific information for the respective nozzle (28); **characterized in,**
**that** the nozzle body (26) comprises a stationary portion and a rotatable nozzle turret (42) and the plurality of nozzles (28) are mounted to the nozzle turret (42), wherein each nozzle (28) is configured to be placeable into an active position (44) by rotation of the nozzle turret (42);
**that** the reader assembly (32) is placed on a location of the spray boom assembly (16) in order to enter a range of communication with the respective transponder tag (30) of the respective nozzle (28) when the nozzle (28) being placed into the active position (44) by rotation; and
**that** the controller (36) is configured to receive the specific information from the respective transponder tag (30) to identify characteristics of the respective nozzle (28) being placed by rotation into the active position (44).

2. The agricultural machine (10) according to claim 1, wherein the transponder tag (30) is a passive radio frequency identification tag.

3. The agricultural machine (10) according to claim 1 or 2, wherein the controller (36) is configured to store and retrieve data related to specific spraying requirements.

4. The agricultural machine (10) according to one of the claims 1 to 3, wherein the controller (36) is configured to vary sprayer settings based on the identified nozzle (28) in the active position (44) and its characteristics and the specific spraying requirements.

5. The agricultural machine (10) according to one of the claims 1 to 4, wherein the sprayer settings include one or more of boom height, spray pressure, sprayer speed and spray drift.

6. The agricultural machine (10) according to one of the claims 1 to 5, wherein the specific information of the nozzle (28) includes type of the nozzle, size of the nozzle and spray angle.

7. The agricultural machine (10) according to one of the claims 1 to 6, wherein location of the spray boom assembly on which the reader assembly (34) is placed, is the stationary portion of the nozzle body (26) in such way that it enters a range of communication with the respective transponder tag (30) of the respective nozzle (28) when the respective nozzle (28) is placed in the active position (44) by rotation.

8. The agricultural machine (10) according to one of the claims 1 to 7, comprising a self-propelled or trailed agricultural sprayer.

9. A method of identifying a nozzle (28) in an active position (44) and its characteristics on an agricultural machine of one of the claims 1 to 8, the nozzle (28) is mounted on a spray boom assembly (16) of said agricultural machine,
the method comprising the following steps:
placing a nozzle (28) into an active position (44) by rotation;
entering a range of communication between the reader assembly (32) and the respective transponder tag (30) of the nozzle (28) in the active position (44);
emitting primary electromagnetic waves (38) through an antenna (34) of the reader assembly (32);
receiving the primary electromagnetic waves (38) by the respective transponder tag (30); energizing the respective transponder tag (30) upon receiving the primary electromagnetic waves (38) in order to generate secondary electromagnetic waves (40) by the respective transponder tag (30) based on specific information for the respective nozzle (28);
emitting the secondary electromagnetic waves (40) by the respective transponder tag (30);
receiving the secondary electromagnetic waves (40) by the reader assembly (32); identifying the nozzle (28) in the active position (44) and its characteristics by the controller (36) based on the secondary electromagnetic waves (40).

10. The method according to claim 9, further comprising the step of storing and retrieving data related to specific spraying requirements by the controller (36).

11. The method according to claim 10, further comprising the step of varying sprayer settings by the controller (36) based on the identified nozzle (28) in the active position (44) and its characteristics and the specific spraying requirements.
